# EUROPÄISCHE PATENTSCHRIFT

(11) **EP 0 723 495 B1**
(45) Veröffentlichungstag und Bekanntmachung des Hinweises auf die Patenterteilung: **13.05.1998**
(21) Anmeldenummer: 95913015.4
(22) Anmeldetag: 08.03.1995
(51) Int. Cl.: B29C 44/56, B30B 11/22

(54) **VORRICHTUNG UND VERFAHREN ZUR FREISETZUNG VON TREIBGAS AUS GESCHÄUMTEN MATERIALIEN**
DEVICE AND PROCESS FOR RELEASING PROPELLANT FROM FOAMED MATERIALS
DISPOSITIF ET PROCEDE PERMETTANT DE LIBERER LE GAZ PROPULSEUR CONTENU DANS DES MATERIAUX CELLULAIRES EXPANSES

(30) Priorität: 23.03.1994 DE 4410083
(43) Veröffentlichungstag der Anmeldung: 31.07.1996
(73) Patentinhaber: BRESCH ENTSORGUNG GmbH, D-24539 Neumünster (DE)
(72) Erfinder: LANDAHL, Claus-Dieter, D-24626 Gross Kummerfeld (DE); PLASS, Eugen, D-21035 Hamburg (DE)
(86) Internationale Anmeldenummer: DE9500331
(87) Internationale Veröffentlichungsnummer: WO9525623

(56) Entgegenhaltungen:
- EP-A- 0 143 414
- EP-A- 0 458 172
- DE-A- 4 133 915
- US-A- 2 059 486

## Beschreibung

Die vorliegende Erfindung betrifft eine Vorrichtung zur Freisetzung von Treibgas aus geschäumten Materialien, gemäß dem Oberbegriff des Patentanspruchs 1.

Die Erfindung betrifft ferner ein Verfahren zur Freisetzung von Treibgas aus geschäumten Materialien.

Schaumstoffe werden im allgemeinen unter Verwendung eines Treibgases erzeugt. Technisch von besonderer Bedeutung, insbesondere im Isolierbereich, zum Beispiel im Baugewerbe oder bei der Kühlschrankherstellung, ist der Polyurethanschaum, insbesondere sogenannter PUR-Hartschaum. Andere durch Treibmittel hergestellte Schaumstoffe sind beispielsweise Polystyrol und Schaumgummis. Die Treibmittel in den Bläschen des geschäumten Materials entweichen nach und nach aus denselben in die Atmosphäre, besonders aus teilweise beschädigten Altschaumstoffen. Dies hat zur Folge, daß die Treibmittel nach und nach auch in die höheren Bereiche der Atmosphäre gelangen. Es ist bekannt, daß auf diese Weise Fluorkohlenwasserstoffe bzw. aus diesen gebildete Radikale in der Stratosphäre durch Umsetzung mit Ozon die Ozonschicht zerstören.

Es ist daher eine sehr wichtige Aufgabenstellung, Schaumstoffabfälle so aufzuarbeiten, daß die Treibmittel vollständig abgetrennt werden können und daß das verbleibende Schaumstoffmaterial ggf. einer Wiederverwertung zugeführt werden kann.

Die bisherigen Maßnahmen zur Lösung dieser Aufgabe sind unbefriedigend.

So wird in der DE-A-39 00 441 ein Verfahren beschrieben, bei dem die Zerkleinerung von PUR-Schaum unter Vakuum erfolgt und eine "Temperierung" mit Infrarot, aufgesprühtem heißem Ölnebel, Wasserdampf oder Heißluft erfolgt.

Man benötigt hohe Verweilzeiten, erhält ein stark verdünntes FCKW-enthaltendes Gas und benetztes, entgastes PUR-Material.

In der DE-A-39 41 742 wird ein Verfahren offenbart, nach dem in zwei separat geregelten Unterdruckkammern gearbeitet werden muß. Auch hier erhält man ein Gas, in dem FCKW in hoher Verdünnung vorliegt.

In US-A-2, 059 486 ist eine verbesserte Preßmaschine offenbart, um Materialien wie Tierfutter in kleine Preßkörper zu brikettieren. Sie weist eine durchlochte Scheibe auf, durch die das Gut extrudiert wird. Außerhalb befindet sich an der Scheibe ein Messer, mit dem das extrudierte Gut abgeschnitten wird.

In der Europäischen Patentanmeldung EP-A-0 143 414 ist eine Pelletiermaschine beschrieben, in der Preßrollen kollerartig über eine mit Durchgangslöchern versehene Matrize kreisen, wobei die Oberflächen der Preßrollen und der Matrize wenigstens teilweise mit ineinandergreifenden Zähnen versehen sind.

Die EP-A-0 458 172 offenbart ein Verfahren zur Beseitigung von Treibmitteln, insbesondere Fluorchlorkohlenwasserstoffen, wobei der Kunststoffschaum verdichtet und anschließend in einer gasdichten Anlage zerkleinert wird.

In der DE-A-41 33 915 wird ein Verfahren offenbart, zum Abtrennen von Treibgasen aus PUR-Schaum, wobei die Zerkleinerung in einem bestimmten Temperaturbereich erfolgt. DieTemperatur wird durch Reibungskräfte im Zerkleinerungsgerät selbst erzeugt. Bevorzugt sind Kollergänge mit umlaufenden Walzen, die das Material durch kleine konische Bohrungen pressen. Unterhalb der Bohrungen wird das hindurchgepreßte Gut mit einem Schneidwerkzeug abgeschnitten.

Der gleichen Anmelderin ist es nunmehr gelungen, ausgehend von der Offenbarung der DE-A-41 33 915, die Zerkleinerungsvorrichtung so zu verbessern, das mit hoher Zuverlässigkeit eine vollständige Entgasung des eingesetzten PUR-Schaums erfolgt, ohne daß Schneidwerkzeuge eingesetzt werden müssen.

Die erfindungsgemäße Vorrichtung dient zur Freisetzung des Treibgases aus dem geschäumten Material, wobei diese wenigstens ein über einer mit Bohrungen versehenen Matrize angeordnetes rollenartiges Preßorgan aufweist, ein Gehäuse, indem das/die Preßorgan/e angeordnet ist/sind, wobei die Vorrichtung zur Bewegung des/der Preßorgans/e einen Antriebsmotor aufweist, dadurch gekennzeichnet, daß die Matrize eine Dicke von 20 bis 150 mm, bevorzugt 40 bis 80 mm und besonders bevorzugt 50 bis 70 mm aufweist, daß die Bohrungen einen Durchmesser von 3 bis 20 mm, bevorzugt 3 bis 10 mm und besonders bevorzugt 5 bis 7 mm aufweisen und daß die Matrizenfläche 100 bis 7000 qcm beträgt, bevorzugt 200 bis 2500 qcm.

Die vorliegende Erfindung betrifft ferner ein Verfahren zur Freisetzung von Treibgas aus geschäumten Matierialien, dadurch gekennzeichnet, daß man das Treibgas enthaltende Material in einen Raum einbringt, der als Bodenfläche eine Matrize aufweist, die mit zahlreichen Bohrungen ausgestattet ist, daß man das Material mit wenigstens einem Preßorgan auf die Matrize aufpreßt, daß das Material durch die Bohrungen hindurchgepreßt wird, das das Verhältnis von Matrizendicke und Bohrungsdurchmesser so ausgelegt ist, daß das gepreßte Material auf eine Temperatur von 80 bis 160° C, bevorzugt von 100 bis 150° C erhitzt wird, wobei die Dicke der Matrize 20 bis 150 mm, bevorzugt 40 bis 80 mm und besonders bevorzugt 50 bis 70 mm beträgt und der Durchmesser der Bohrungen 3 bis 20 mm, bevorzugt 3 bis 10 mm und besonders bevorzugt 5 bis 7 mm beträgt und daß ein Preßverhältnis, nämlich das Verhältnis der Bohrungsdurchmesser zur Matrizendicke von 1:3 bis 1:7, bevorzugt 1:4 bis 1:6 und besonders bevorzugt von 1:5 eingestellt wird.

Zweckmäßige Weiterbildungen der Erfindung sind in den abhängigen Ansprüchen beschrieben.

Der aus dem Kühlaggregat abgetrennte PUR-Schaum gelangt nach Vorzerkleinerung auf 15 bis 20 mm in die erfindungsgemäße Vorrichtung.

Das zerkleinerte Material kann in noch kleineren Partikeln eingesetzt werden, andererseits ist es jedoch wünschenswert, die durchschnittliche Partikelgröße von 20 mm nicht wesentlich zu überschreiten.

Die erfindungsgemäße Vorrichtung wird unter Absaugung, also leichtem Unterdruck betrieben, um die freigesetzten FCKW's vollständig zu erfassen und einer Verflüssigung zuzuführen. Ein typisches FCKW-Treibmittel ist das sogenannte R11, Trichlorfluormethan.

Die erfindungsgemäße Vorrichtung besteht aus einem Gehäuse, in dem sich eine Matrize mit Bohrungen befindet. Oberhalb der Matrize sind rollenartige Preßorgane angeordnet, die das von oben zugeführte PUR-Schaumgut durch die Bohrungen pressen. Die Preßorgane sind rollenartig (oder können auch walzenartig sein) und weisen auf der Lauffläche bevorzugt Profile auf, die wiederum bevorzugten Profile sind Querrillen.
Das Verhältnis von Rollendurchmesser zu Rollenbreite beträgt 150 bis 280 zu 100 bis 150 mm, so daß bei einem Rollendurchmesser von z. B. 150 mm die Rollenbreite bis zu 150 mm betragen kann und bei einem Rollendurchmesser von 280 mm 100 bis 150 mm betragen kann.

Die Rollen bewegen sich bevorzugt im Sinne eines Kollerganges um eine senkrechte Achse. Im allgemeinen liegt die Anzahl der Rollen bei 1 bis 6. Die Rollen werden durch einen Antriebsmotor bewegt. Die Laufgeschwindigkeit der Rollen, im allgemeinen die Umlaufgeschwindigkeit liegt bei 0,2 bis 3,5 m/sec., bevorzugt bei 0,5 bis 3 m/sec. und besonders bevorzugt bei 2,5 bis 3 m/sec.
Die Matritze hat eine Fläche von 100 bis 7000 cm², bevorzugt von 200 bis 2500 cm² und eine Dicke von 20 bis 150 mm, bevorzugt von 40 bis 80 mm und besonders bevorzugt von 50 bis 70 mm.
Die Bohrungen sind zylindisch. Im zylindrischen Teil weisen die Bohrungen einen Durchmesser von 3 bis 20 mm, bevorzugt 3 bis 10 mm und besonders bevorzugt 5 bis 7 mm auf. An der der Aufgabenseite des zu zerkleinernden Gutes abgewandten Seite erweitern sich die Bohrungsdurchmesser in der Weise, daß bei einem Bohrungsdurchmesser von 3 bis 20 mm eine konusartige Erweiterung auf 4 bis 30 mm vorliegt und bei einem Bohrungsdurchmesser von 3 bis 10 mm eine konusartige Erweiterung auf 8 bis 18 mm vorliegt. Die Bohrungen weisen bevorzugt auch eine Erweiterung auf der Aufgabeseite auf. Hierdurch wird die Zuführung des zu entgasenden Materials in die zylindrische Bohrung verbessert. Die Größe der Erweiterung hat erheblichen Einfluß auf die Menge an Material, die durch die Bohrung gepresst wird und damit auch auf die Temperatur, die sich einstellt.

Während des Pressvorganges verdampft anhaftende Wasserfeuchtigkeit. Der Dampf verbessert das Austreiben des Treibmittels. Bei trockenem Einsatzmaterial kann daher auch Wasser zugesetzt werden. Das Wasser wird bevorzugt aus der Kondensation der eigenen Anlage entnommen, so daß ein Wasserrecycling möglich ist.

Erfindungswesentlich ist das sogenannte Preßverhältnis, nämlich das Verhältnis von Bohrungsdurchmesser im zylindrischen Teil zur Dicke der Matrize.

Das Preßverhältnis ist erfindungsgemäß 1:3 bis 1:7, bevorzugt 1:4 bis 1:6 und besonders bevorzugt 1:5, das heißt bei einem Bohrungsdurchmesser von 1 mm kann die Dicke der Matritze 3 bis 7 mm betragen.

Dies hat zur Folge, daß durch die Reib-, Scher- und Mahlkräfte das eingebrachte Einsatzgut auf eine Temperatur von 80 bis 160° C, bevorzugt von 100 bis 150° C zuverlässig erhitztwird.

Durch das Zusammenwirken der Zerkleinerung des Schaumstoffes, insbesondere von PUR-Schaum bzw. PUR-Hartschaum und durch die erzeugte Temperatur werden die FCKW's vollständig aus dem Schaum ausgetrieben.

Pro cm² weist die Matritze erfindungsgemäß 0,5 bis 3 Bohrungen, bevorzugt 0,7 bis 2 Bohrungen und besonders bevorzugt 0,7 bis 1,3 Bohrungen auf.

Die vorliegende Erfindung betrifft auch ein Verfahren zur Freisetzung von Treibgas aus anderen geschäumten Materialien. Zur Durchführung des Verfahrens wird der zu behandelnde Schaum in das Gehäuse, üblicherweise von oben eingebracht, indem sich die Preßorgane und die Matrize als Bodenfläche befinden. Die rollenartigen Preßorgane pressen das Gut durch die bereits beschriebenen Bohrungen der Matrize. Das gepreßte Material wird hierbei auf die bereits genannte Temperatur durch die Preß-, Mahl- und Reibvorgänge erhitzt. Das Verhältnis von Bohrungsdurchmesser und Matrizendicke entspricht dem bereits erwähnten Preßverhältnis.

Das gepreßte Gut ist nach Durchlaufen des Verfahrens FCKW-frei und trocken und kann einer Wiederverwertung zugeführt werden, z. B. kann es als Material zum Aufsaugen von Öl und anderen Flüssigkeiten genutzt werden. Auch als Füllmaterial für verschiedene Anwendungen ist es nutzbar. Ursprünglich im Isoliermaterial vorhandene Feuchtigkeit, die während der Isolierschaumverarbeitung freigesetzt und in Kühlern kondensiert wurde, kann dem gepressten, treibmittelfreien Isolierschaumgut auch wieder zugesetzt werden. Das zurückgewonnene FCKW kann entweder vollständig einer Wiederverwertung oder einer chemischen Umwandlung bzw. Vernichtung zugeführt werden.

Die erfindungsgemäße Vorrichtung und das Verfahren unter Verwendung dieser Vorrichtung stellen gegenüber dem Stand der Technik eine entscheidende Verbesserung dar, bzgl. Betriebssicherheit, zuverlässiger, vollständiger Entgasung des Schaumstoffmaterials und Wirtschaftlichkeit des Verfahrens.

Die vorliegende Erfindung ist nicht auf FCKW's beschränkt. Auch andere Treibgase, wie z. B. niedere Kohlenwasserstoffe, wie Propan, Butan, Pentan und Dimethyläther, können vollständig vom Schaummaterial getrennt werden.

Die Figur stellt die erfindungsgemäße Form der Bohrungen dar.

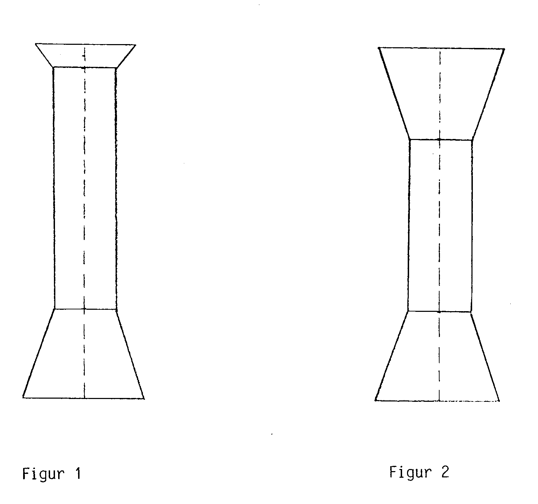

Figur 1 ist eine Bohrung die sich auf der der Zuführung des zu mahlenden Gutes entgegengesetzten Seite erweitert.

Figur 2 stellt eine Bohrung dar, die eine Erweiterung auf beiden Seiten aufweist.

## Patentansprüche

1. Vorrichtung zur Freisetzung von Treibgas aus geschäumten Materialien, wobei diese wenigstens ein über einer mit Bohrungen versehenen Matrize angeordnetes rollenartiges Pressorgan aufweist, ein Gehäuse, in dem das/die Pressorgan/e angeordnet ist/sind, wobei die Vorrichtung zur Bewegung des/der Pressorgans/e einen Antriebsmotor aufweist, dadurch gekennzeichnet, daß die Matrize eine Dicke von 20 bis 150 mm, bevorzugt 40 bis 80 mm und besonders bevorzugt 50 bis 70 mm aufweist, daß die Bohrungen einen Durchmesser von 3 bis 20 mm, bevorzugt 3 bis 10 mm und besonders bevorzugt 5 bis 7 mm aufweisen und daß die Matrizenfläche 100 bis 7000 cm², bevorzugt 200 bis 2500 cm² groß ist.

2. Vorrichtung nach Anspruch 1, dadurch gekennzeichnet, daß die Matritzenfläche pro cm² 0,5 bis 3 Bohrungen, bevorzugt 0,7 bis 2 Bohrungen und besonders bevorzugt 0,7 bis 1,3 Bohrungen aufweist.

3. Vorrichtung nach wenigstens einem der Ansprüche 1 und 2, dadurch gekennzeichnet, daß die Bohrungen auf der der Aufgabeseite des zu pressenden Materials entgegengesetzten Seite, bei einem Bohrungsdurchmesser von 3 bis 20 mm konusartige Erweiterungen der Bohrungsdurchmesser auf 4 bis 30 mm und bei einem Bohrungsdurchmesser von 3 bis 10 mm konusartige Erweiterungen der Bohrungsdurchmesser auf 8 bis 18 mm aufweisen.

4. Vorrichtung nach wenigstens einem der Ansprüche 1 bis 3, dadurch gekennzeichnet, daß das/die Pressorgan/e rollenartig ausgebildet ist/sind, wobei das Verhältnis von Rollendurchmesser zu Rollenbreite 150 bis 280 zu 100 bis 150 mm beträgt.

5. Vorrichtung nach wenigstens einem der Ansprüche 1 bis 4, dadurch gekennzeichnet, daß diese eine zentrale , senkrechte Achse aufweist, um die sich die Rolle/n dreht/drehen.

6. Vorrichtung nach wenigstens einem der Ansprüche 1 bis 5, dadurch gekennzeichnet, daß die Lauffläche der Pressorgane Profile, bevorzugt Querrillen aufweist.

7. Vorrichtung nach wenigstens einem der Ansprüche 1 bis 6, dadurch gekennzeichnet, daß das Treibgas enthaltende Material PUR-Schaum ist, bevorzugt PUR-Hartschaum ist.

8. Vorrichtung nach wenigstens einem der Ansprüche 1 bis 7, dadurch gekennzeichnet, daß das Pressverhältnis, nämlich das Verhältnis Bohrungsdurchmesser zur Matrizendicke 1:3 bis 1:7, bevorzugt 1:4 bis 1:6 und besonders bevorzugt 1:5 ist.

9. Vorrichtung nach wenigstens einem der Ansprüche 1 bis 8, dadurch gekennzeichnet, daß der nicht erweiterte Teil der Bohrungen zylindrisch ist.

10. Verfahren zur Freisetzung von Treibgas aus geschäumten Materialien, wobei man das Treibgas enthaltende Material in einen Raum einbringt, der als Bodenfläche eine Matrize aufweist, die mit zahlreichen Bohrungen ausgestattet ist, und das Material mit wenigstens einem Pressorgan auf die Matrize aufpresst und das Material durch die Bohrungen hindurchgepreßt wird, dadurch gekennzeichnet, daß das Verhältnis von Matrizendicke und Bohrungsdurchmesser so ausgelegt ist, daß das gepreßte Material auf eine Temperatur von 80 bis 160° C, bevorzugt 100 bis 150 ° C erhitzt wird, wobei die Dicke der Matrize 20 bis 150 mm, bevorzugt 40 bis 80 mm und besonders bevorzugt 50 bis 70 mm beträgt und der Durchmesser der Bohrungen 3 bis 20 mm, bevorzugt 3 bis 10 mm und besonders bevorzugt 5 bis 7 mm beträgt und daß ein Pressverhältnis, nämlich das Verhältnis Bohrungsdurchmesser zur Matrizendicke von 1:3 bis 1:7, bevorzugt 1:4 bis 1:6 und besonders bevorzugt von 1:5 eingestellt wird.

11. Verfahren nach Anspruch 10, dadurch gekennzeichnet, daß das Material durch die Bohrungen einer Matrize gepreßt wird, die auf der der Aufgabenseite des zu pressenden Material entgegengesetzten Seite bei einem Bohrungsdurchmesser von 3 bis 20 mm konusartige Erweiterungen der Bohrungsdurchmesser auf 4 bis 30 mm und bei einem Bohrungsdurchmesser von 3 bis 10 mm konusartige Erweiterungen der Bohrungsdurchmesser auf 8 bis 18 mm aufweisen.

12. Verfahren nach wenigstens einem der Ansprüche 10 und 11, dadurch gekennzeichnet, daß das Material mit als Rollen ausgebildeten Preßorganen behandelt wird, wobei das Verhältnis von Rollendurchmesser zu Rollenbreite 150 bis 280 zu 100 bis 150 mm beträgt.

13. Verfahren nach wenigstens einem der Ansprüche 10 bis 12, dadurch gekennzeichnet, daß sich die Rolle/n um eine zentrale Achse bewegt/bewegen.

14. Verfahren nach wenigstens einem der Ansprüche 10 bis 13, dadurch gekennzeichnet, daß sich die Rollen mit einer Geschwindigkeit von 0,2 bis 3,5 m/sec., bevorzugt 0,5 bis 3 m/sec. und besonders bevorzugt 2,5 bis 3 m/sec. bewegen.

15. Verfahren nach wenigstens einem der Ansprüche 10 bis 14, dadurch gekennzeichnet, daß die Pressung des Materials mittels eines Preßorgans erfolgt, dessen Lauffläche Profile, bevorzugt Querrillen aufweist.

16. Verfahren nach wenigstens einem der Ansprüche 9 bis 14, dadurch gekennzeichnet, daß Treibgas enthaltender PUR-Schaum, bevorzugt PUR-Hartschaum durch die Bohrungen gepreßt wird.

## Claims

1. Device for the release of propel ant gas from foamed materials, whereby the device contains at least one roller-like pressing organ arranged above a matrix provided with borings, a housing in which the pressing organ(s) is(are) arranged, whereby the device to move the pressing organ(s) is a driving motor, **characterized** in that the matrix has a thickness of 20 to 150 mm, preferably 40 to 80 mm and particularly preferable of 50 to 70 mm, that the borings have a diameter of 3 to 20 mm, preferably 3 to 10 mm and particularly preferable 5 to 7 mm and that the matrix area amounts to 100 to 7,000 cm², preferably to 200 to 2,500 cm².

2. Device according to claim 1, **characterized** in that the matrix area contains 0.5 to 3 borings per cm², preferably 0.7 to 2 borings per cm² and particularly preferable 0.7 to 1.3 borings per cm².

3. Device according to at least one of claims 1 and 2, **characterized** in that the borings with a boring diameter from 3 to 20 mm contain cone-like enlargements of 4 to 30 mm on the side opposite to the feed side for the material to be pressed, and borings with a diameter of 3 to 10 mm cone-like enlargements of 8 to 18 mm.

4. Device according to at least one of claims 1 to 3, **characterized** in that the pressing organ(s) is(are) shaped roller-like, whereby the ratio of the roller diameter to the roller width amounts to 150 through 280 to 100 through 150.

5. Device according to at least one of claims 1 through 4, **characterized** in that it contains a central, vertical axis about which the roller(s) rotate(s).

6. Device according to at least one of claims 1 through 5, **characterized** in that the running surfaces of the pressing devices exhibit profiles, preferably cross grooves.

7. Device according to at least one of claims 1 through 6, **characterized** in that the material containing the propellant gas is PUR foam, preferably PUR hard foam.

8. Device according to at least one of claims 1 through 7, **characterized** in that the pressing ratio, namely the ratio of the boring diameter to the matrix thickness is 1:3 to 1:7, preferably 1:4 to 1:6 and particularly preferable 1:5.

9. Device according to at least one of claims 1 through 8, **characterized** in that the non-enlarged part of the boring is cylindrical.

10. Process for the release of propellant gas from foamed materials, **characterized** in that the material containing the propellant gas is introduced into a chamber which contains a matrix as the bottom, which is equipped with numerous borings, that the material is pressed onto the matrix with at least one pressing organ, that the material is pressed through the borings, that the ratio of the matrix thickness to the boring diameter is designed in such a way that the pressed material is heated to a temperature of 80 to 160°C, preferably 100 to 150°C, whereby the thickness of the matrix amounts to 20 to 150 mm, preferably to 40 to 80 mm and particularly preferable to 50 to 70 mm and the diameter of the borings amounts to 3 to 20 mm, preferably 3 to 10 mm and particularly preferable to 5 to 7 mm, and that a pressing ratio, namely the ratio of the boring diameter to the matrix thickness is from 1:3 to 1:7, preferably 1:4 to 1:6 and particularly preferable 1:5.

11. Process according to claim 10, **characterized** in that the material is pressed through the borings of a matrix which, with a boring diameter of 3 to 20 mm, exhibit enlargements of 4 to 30 mm on the side opposite to the feed side for the material to be pressed, and, with a boring diameter of 3 to 10 mm, exhibit enlargements from 8 to 18 mm on the side opposite to the feed side for the material to be pressed.

12. Process according to at least one of claims 10 and 11, **characterized** in that the material is handled with pressing devices shaped as rollers, whereby the ratio of the roller diameter to the roller width amounts to 150 through 280 to 100 through 150.

13. Process according to at least one of claims 10 to 12, **characterized** in that the roller(s) moves(move) about a central axis.

14. Process according to at least one of claims 10 to 13, **characterized** in that the rollers move with a speed of 0.2 to 3.5 m/sec, preferably of 0.5 to 3 m/sec, and particularly preferable of 2.5 to 3 m/sec.

15. Process according to at least one of claims 10 to 14, **characterized** in that the pressing of the material takes place with the use of a pressing organ, the running surface of which contains profiles, preferably cross grooves.

16. Process according to at least one of claims 10 to 15, **characterized** in that the PUR foam containing the propellant gas, preferably PUR hard foam, is pressed through the borings.

## Revendications

1. Appareil pour la libération du gaz propulseur hors de matière moussée à l' occasion de quoi l' appareil présente un organe presseur formé qu' une bobine quel est disposé audessus d' une matrice équipée avec des forages et présente une caisse, dans laquelle l' organe presseur (les organes presseurs) est (sont) disposé (s), à l' occasion de quoi l' appareil dispose un moteur de commande pour le mouvement du organe presseur, caractérisé en ce que la matrice dispose une èpaisseur de 20 à 150 mm, préférable de 40 à 80 mm et particulièrement préférable de 50 à 70 mm, en ce que les forages disposent un diamètre de 3 à 20 mm, préférable de 5 à 10 mm et particulièrement préférable de 5 à 7 mm et en ce que la surface de la matrice est 100 à 7.000 cm², préférable 200 à 2.500 cm².

2. Appareil selon la revendication 1, caractérisé en ce que la surface de la matrice dispose 0,5 à 3 forages par cm², préférable 0,7 à 2 forages par cm² et particulièrement préférable 0,7 à 1,3 forages par cm².

3. Appareil selon les revendications 1 et 2, caractérisé en ce que les forages avec un diamètre de 3 à 20 mm disposent des élargissement coniques de 4 à 30 mm au côté opposé du côté ou la matière à presser est chargée et en ce que les forages avec un diamètre de 3 à 10 mm disposent des élargissement de 8 à 18 mm au côté opposè du côté ou la matierè à presser est chargée.

4. Appareil selon les revendications 1 à 3, caractérisé en ce que l' organe presseur (les organes presseur) sont formés comme une bobine et en ce que le rapport du diamètre de la bobine à l' épaisseur de la bobine est 150 jusque 280 à 100 jusque 150.

5. Appareil selon les revendications 1 à 4, caractérisé en ce que la bobine (les bobines) tourne (nt) autour d' un axe central et vertical.

6. Appareil selon les revendications 1 à 5, caractérisé en ce que la surface de roulement, dispose des profils, préférable des sculptures à rayures transversales.

7. Appareil selon les revendications 1 à 6, caractérisé en ce que la matière contenant le gaz propulseur, est du mousse de polyuréthane, préférable du mousse de polyuréthane frigide.

8. Appareil selon les revendications 1 à 7, caractérisé en ce que le rapport presseur c' est - à - dire le rapport du diamètre des forages à l' épaisseur de la matrice est ajusté à 1 à 3 jusque 1 à 7, préférable à 1 à 4 jusque 1 à 6 et particulièrement préférable à 1 à 5.

9. Appareil selon les revendications 1 à 8, caractérisé en ce que la portion des forages quelle n'est pas enlargée, est cylindrique.

10. Procédé pour la libération du gaz propulseur hors de matière moussée, caractérisé en ce que la matière contenant du gas propulseur est introduie dans une caisse, quelle dispose un encombrement, consistant d' une matrice, quelle dispose des forages nombreuse, en ce que la matière est engager par pression sur la matrice avec au moins un organe presseur, en ce que la matière est fait passée à travers les forages et en ce que le rapport de l' épaisseur de la matrice au diamètre des forages est ainsi dimensionné, que la matière pressée est échauffée à une température de 80 à 160 °C, préférable de 100 à 150 °C, à l' occasion de quoi l' épaisseur de la matrice est 20 à 150 mm, préférable de 40 à 80 °C et particulièrement de 50 à 70 mm et le diamètre des forages est 3 à 20 mm, préférable 3 à 10 mm et particulièrement de 5 à 7 cm et en ce que le rapport presseur, c' est - à - dire le rapport du diamètre des forages à l' épaisseur de la matrice est ajusté à 1 à 3 jusque 1 à 7, préférable à 1 à 4 jusque 1 à 6 est particulièrement à 1 à 5.

11. Procédé selon la revendication 10, caractérisé en ce que la matière est pressée à travers les forages d' une matrice quelle disposent des élargissement coniques de 4 à 30 mm, en cas d' un diamètre des forages de 3 à 20 mm au côté opposé du côté où la matière à presser est chargée et en cas d' un diamètre des forages de 3 à 10 mm des èlargissement conique de 8 à 18 mm.

12. Procédé selon les revendications 10 et 11, caractérisé en ce que la matière est traitée avec des organes presseur quelle sont formés comme des bobines à l' occasion de quoi le rapport du diamètre de la bobine à l' épaisseur de la bobine est 150 jusque 280 à 100 jusque 150.

13. Procédé selon les revendications 10 à 12, caractérisé en ce que la bobine tourne autour d' un axe central.

14. Procédé selon les revendications 10 à 13, caractérisé en ce que les bobines meuvent avec une vitesse de 0,2 à 3,5 m/sec, préférable de 0,5 à 3 m/sec et particulièrement de 2,5 à 3 m/sec.

15. Procédé selon les revendications 10 à 14, caractérisé en ce que le presser de la matière à lieu avec un organe presseur d' une surface de roulement disposant des profiles, préférable des sculpures à rayures transversales.

16. Procédé selon les revendications 10 à 15 caracterisé en ce que le mousse contenant le gas propulseur est du mousse de polyuréthane, préférable du mousse de polyuréthane frigide.
